# EUROPEAN PATENT APPLICATION

(11) **EP 2 199 311 A1**
(43) Date of publication of application: **23.06.2010**
(21) Application number: 09180260.3
(22) Date of filing: 21.12.2009
(51) Int. Cl.: C08F 283/01, C08F 290/06, C08F 290/14, H01B 3/00, H01F 27/32

(54) **Thermosetting resin composition and coil for electric machine**

(30) Priority: 22.12.2008 JP 2008324895
(71) Applicant: Hitachi Ltd., Tokyo 100-8280 (JP)
(72) Inventor: Muraki, Takahito, Tokyo 100-8220 (JP); Morooka, Hisashi, Tokyo 100-8220 (JP); Kagawa, Hiroyuki, Tokyo 100-8220 (JP); Amou, Satoru, Tokyo 100-8220 (JP)
(74) Representative: Beetz & Partner

(57) **Abstract**

A thermosetting resin composition comprises (A) a polymeric component having at least two polymerizable substituents in the molecule, (B) a compound having at least one polymerizable substituent in the molecule and (C) a living polymerization agent for curing the resin composition.

## Description

### The field of the invention:

The present invention relates to a thermosetting resin composition containing a living polymerization reagent, and more particularly to a thermosetting resin composition suitable for electric insulation and bonding of motors, transformers, etc of electric machines.

### Background art:

Coils for rotating machines such as motors and static apparatuses such as transformers are treated with thermosetting resin compositions for the purpose of electric insulation, heat dissipation at the time of operation, absorption of beat, generated by electric vibration, bonding of constituting materials, etc. For the thermosetting resin materials that posses the above functions there have mainly been used unsaturated polyester resins, epoxy resins, etc. Among them, unsaturated polyester resins have been widely used because they are excellent in curability, tack-free, bondability, electric insulation and economy.

In order to meet the energy savings and low cost in recent electric machines high productivity of the machines is required. Accordingly, curability at low temperatures for short time is required in processing in the machine production using resins. Thus, thermosetting resin compositions for electric machines that meet the low temperature and short processing time have been desired.

However, conventional unsaturated polyester resins tend to lower tack-free and physical properties of cured products, which are obtained by the low-temperature and short time curing of the resin compositions with conventional polymerization initiators such as peroxides because they exhibit insufficient polymerization reaction.

On the other hand, a living polymerization method has been developed as a new radical polymerization method as disclosed in patent document No. 1. It is reported that thermoplastic polymers having nearly mono-distribution, thermoplastic polymers having tacticity, or regulated thermoplastic polymers having functional groups can be produced.

There is patent document No. 2, which discloses that the living polymerization method is applied to thermosetting resins wherein polymer chains prepared by the living polymerization are cured by reacting carbon-carbon double bonds with hydrosilyl groups in the presence of metal complexes of transition-metals such as platinum, etc as a curing catalyst.

Patent document No. 3 discloses a combination of crystalline additives prepared by the living polymerization method and a curing promoter to thereby achieve the low-temperature and short time curing of polyester resin varnishes.

In patent document No. 2 the living polymerization is employed for preparing polymer components, and in patent document No. 3 the living polymerization method is employed to prepare the additives; the living polymerization method is not employed to cross-link or cure the resin compositions.

In patent document No. 4 there is disclosed a dental adhesive composition comprising (A) mono- or poly functional (meth)acrylate monomer, (B) (meth)acrylate monomer having an acidic group containing at least one (meth) acryloyloxyl group.

In the specification "meth" acrylate or the like means acrylate or methacrylate.
Patent document No. 1: U.S. Patent No. 4,581,429
Patent document No. 2: Japanese Patent laid-open 2000-72953
Patent document No. 3: Japanese patent laid-open 2000-44636
Patent document No. 4: Japanese Patent Publication H7-64699

### Summary of the invention:

An object of the present invention is to provide a thermosetting resin composition having curability at low-temperature in short time and excellent heat resistance.

The present inventors have conducted researches to attain the above object. As a result, they have found thermosetting resin compositions that give cured products having energy saving and low-temperature and short time curability by using a living polymerization reagent.

The living polymerization agent is used to mean the ordinary definition thereof. The living polymerization is a reaction where there are no or little of sub-reactions such as chain transfer or termination reactions. Typical living radical polymerization reagents are borane (1), N-alkoxy amine derivatives and atom transfer radical polymerization reagents.

The thermosetting resin composition according to the present invention comprises (A) a polymer component having at least two polymerizable substituents, (B) a chemical compound having at least one polymerizable group, and (C) a living polymerization reagent for curing the resin components.

Further, the present invention provides a thermosetting resin composition comprising (A) the polymer having two or more of polymerizable groups, (B) the chemical compound having one or more of the polymerizable group, (C) the living polymerization reagent and (D) an organic peroxide and/or an organic azo compound for accelerating the curing reaction.

According to embodiments of the present invention, it is possible to provide a thermosetting resin composition having low-temperature and short time curability and having excellent heat resistance.

### Brief description of the drawings:

Fig. 1 shows a diagrammatic coil for electric machines prepared by using a thermosetting resin composition of the present invention.
Fig. 2 shown a motor of the present invention, wherein Fig. 2(a) is a side cross sectional view and Fig.2(b) is a cross sectional view along the line II-II.

### Detailed description of preferred embodiments:

In the following components employed in the present invention will be explained in detail.

### [(A) Component]

The polymer components having two or more polymerizable groups have a molecular weight of 1000 or more. Preferably, the molecular weight is 1000 to 5000. The polymerizable groups should be ethylenic unsaturated bonds, which means polymerizable carbon-carbon double bonds.
(A) Component includes unsaturated polyester resins, urethane (meth)acrylate resins, polyester (meth)acrylate resins and combinations thereof. Among them unsaturated polyester resins are preferable for the purpose of electrical insulation.

The unsaturated polyester resins are not particularly limited, which are produced by poly-condensation reaction of, for example, dicarboxylic acids with polyvalent alcohols.

As dicarboxylic acids as a material for the unsaturated polyester resins, there are, for example, α,β-unsaturated dicarboxylic acids such as maleic acid, maleic anhydride, fumaric acid, itaconic acid, itaconic anhydride, etc. As other dicarboxylic acids, saturated dicarboxylic acids or anhydrides include phthalic acid, phthalic anhydride, halogenated phthalic anhydride, isophthalic acid, terephthalic acid, tetrahydrophthalic acid, tetrahydrophthalic anhydride, hexahydrophthalic acid, hexahydroisophthalic acid, hexahydro-terephthalic acid, cyclopentadiene-maleic anhydride adduct, succinic acid, malonic acid, glutaric acid, adipic acid, sebacic acid, 1,10-decandicarboxylic acid, 2,6-naphthalenedicarboxylic acid, 2,7-naphthalenedicarboxylic acid, 2,3-naphthalenedicarboxylic acid, 2,3-naphthalenedicarboxylic anhydride, 4,4'-biphenyldicarboxylic acid, and dialkylesters thereof. These dicarboxylic acids are used singly or in combinations.

As a material for the unsaturated polyester resins used are polyvalent alcohols including ethylene glycol series such as ethylene glycol, diethylene glycol, propylene glycol series such as propylene glycol, dipropylene glycol, polypropylene glycol, etc, 2-methyl-1,3-propanediol, 1,3-butanediol, adducts of bisphenol A and propylene oxide or ethylene oxide, glycerin, glycerin, trimethyrol propane, 1,3-propanediol, 1,2-cyclohexane glycol, 1,4-cyclohexane glycol, paraxylene glycol, bicyclohexyl-4,4'-diol, 2,6-decarine glycol, tris(2-hydroxyethyl)isocyanurate, etc. Aminoalcohols of ethanol amines may be used, too. These polyvalent alcohols are used singly or in combinations.

Urethane (meth)acrylate resins are not limited. For example, they can be produced by reacting polyisocyanates with polyhydroxyl compounds or polyvalent alcohols, followed by reacting (meth)acrylate compounds containing hydroxyl groups And if desired, arylether compounds containing hydroxyl groups or polyvalent alcohols with the reaction products. Further, it is possible to react polycyanates with the reaction products obtained by the reaction of (meth)acrylate and polyhydroxyl compounds or polyvalent alcohols.

As polyisocyanates for a material of the (meth)acrylate, examples are 2,4-trirenediisocianate, its isomers, diphenylmethanediisocianate, hexamethylenediisocianate, xylylenediisocianate, hydrogen-added xylylenediisocianate, etc. These polyisocyanates are used singly or in combinations.

The polyhydroxyl compound as a material for the (meth)acrylate resins includes polyester polyols, polyether polyols, etc such as glycerin-ethyleneoxide adducts, glycerin-propyleneoxide adducts, glycerin-tetrahydrofuran adducts, trimethyrol propane-ethyleneoxide adducts, etc. These polyhydroxyl compounds are used singly or in combinations.

The polyvalent alcohols as a material for the (meth)acrylate resins are the above-mentioned polyvalent alcohols. These polyvalent alcohols are used singly or in combinations.

The hydroxyl group containing (meth)acrylate compound for a material of the (meth) acrylate resins includes hydroxyl group containing (meth)acrylate ester, as preferable materials, which may be exemplified as 2-hydroxyethyl(meth)acrylate, 2-hydroxypropyle (meth)acrylate, 3-hydroxybutyl (meth)acrylate, polyethylene glycol (meth)acrylate, di(meth)acrylate of tris(hydroxyethyl)isocyanurate, pentaerythritol tri (meth) acrylate, etc. These hydroxyl groups containing (meth)acrylate compounds are used singly or in combinations.

The hydroxyl group containing arylether compounds for a material of the (meth) acrylate resins includes ethylene glycol monoallylether, polyethylene glycol monoallylether, propylene glycol monoallylether, 1,2-butyleneglycol monoallyl ether, 1,3-butyleneglycol mono-arlyether, trimethyrol propane diarlylether, grycerin diallylether, pentaerythritol triarlylether, etc. These hydroxyl group containing arlylether compounds are used singly or in combinations.

The polyester (meth)acrylate resins are not limited, for example, products obtained by reacting the (meth)acrylate compounds with end groups of the unsaturated or saturated polyester resins. As a material for the polyester resins includes the compounds exemplified as the material for the unsaturated polyester resins.

(Meth)acrylate compound as a material for the (meth) acrylate resins are unsaturated glycidyl ether compounds, unsaturated monobasic acid such as (meth)acrylic acids, etc. and their glycidyl esters. These compounds are used singly or in combinations.

Mixing rates of the materials such as the unsaturated polyesters, urethane(met) acrylate resins, polyester(meth)acrylate resins, etc are properly adjusted in accordance with desired resin properties, etc, but not limited specifically.

### [B Component]

(B) The compound having at least one polymerizable substituent is properly selected in accordance with purposes of use of the thermosetting resin compositions, but is not limited specifically. Examples of the compounds are styrene, vinyl toluene, divinyl benzene, α-methyl styrene, (meth)acrylate esters, vinyl acetate, vinyl esters, diallylphthalates, etc. These compounds are used singly or in combinations.

The vinyl esters are not limited specifically; for example, the esters are obtained by reacting epoxy compounds with unsaturated monobasic acids.

Epoxy compounds used as a material for the vinyl esters should have at least two epoxy groups in the molecule, which are not specifically limited, but examples are epi-bis-glycidylether type epoxy resins, 4,4'-biphenol, or glycidylether type epoxy resins obtained by polycondensation of hydrogen-added bisphenol or glycols with epi-halohydrine. These epoxy compounds are used singly or in combinations.

Unsaturated monobasic acids used for a material for the vinyl esters are not limited specifically, but examples are acrylic acid, methacrylic acid, crotonic acid, etc. These compound are used singly or in combinations.

A mixing ratio (A)/(B) of (A) a polymer component having at least two polymerizable substituents to (B) a compound having at least one polymerizable substituent is preferably 80/20 to 1/99 by weight, more preferably, 5/95 to 60/40. If the ratio of (A) is larger than 80 by weight, viscosity of the resin composition will become too large. Impregnation in or coating on the coils of the resin composition having such high viscosity will become difficult and handling of the composition will be difficult. On the other hand, if the ration of (A) is less than 1, curability of the resin composition will become worse and heat resistance of the cured product in terms of thermal weight loss will be large.

The living polymerization reagents (C) used in the present invention are at least one selected from the group consisting of boric compounds represented by the general formula (1) and alkoxy amine derivatives represented by the general formula (2), and atom transfer radical polymerization reagents. Among the boric compounds represented by (1) are suitable because radicals are generated by oxygen. The above living polymerization reagents used in the present invention are examples.

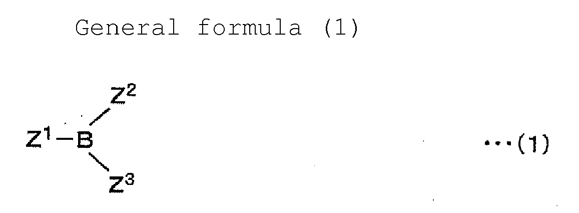

In the formula (1), Z¹, Z² and Z³ are each independently R¹ or R¹O, at least one of Z¹, Z² and Z³ being R¹, wherein R¹ is hydrogen, alkyl group, cycloalkyl group, aralkyl group or allyl group. A carbon number of alkyl is 1 to 12, a carbon numbers of cycloalkyl is 3 to 6, a carbon number of alalkyl is 7 to 15, and a carbon number of allyl is 6 to 14.

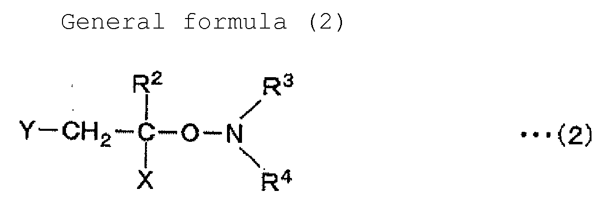

In the formula (2), R² is hydrogen or alkyl group, R³ and R⁴ are independently alkyl group, cycloalkyl group or alkylene group, wherein X is alkyl group, cycloalkyl group, allyl group, or alkoxycarbonyl group, Y is alkyl group, cycloalkyl group, allyl group, alkoxy group or acyloxy group. A carbon number of alkyl is 1 to 12, a carbon numbers of cycloalkyl is 3 to 6, a carbon number of alalkyl is 7 to 15, a carbon number of alkylene is 5 to 9, and a carbon number of alkoxycarbonyl is 1 to 10. The carbon number of alkyl group may be different from the alkyl groups in X and Y.

As the boric compounds there are triethyl borane, tripropyl borane, triisopropyl borane, tri-n-butyl borane, tri-n-amyl borane, tri-n-hexyl borane, tricyclohexyl borane, 9-borabicyclo[3,3,1]nonane, or isopinaconephenyl borane, etc, or oxides of the above boron compounds, which are prepared by partially oxidizing the boron compounds. Since these boron compounds generate oxygen, the reaction is conducted in air atmosphere.

The alkoxy amine derivatives are not specifically limited; they are synthesized from N-oxyl series compounds and ethylenically unsaturated monomers in the presence of radical generation reagents.

The radical generation reagents used in the above reaction are not specifically limited, but exemplified are peroxides such as benzoyl peroxide, lauroyl peroxide, tertiary butyl hydroperoxide, cumene hydroperoxide, di-tertiary butylperoxide, etc. or organic quiazo compounds such as 2,2'-azobis (isobutylonitril), 1,1'-azobis(cyclohexane carbonitrile), 4,4'-azobis(4-cyanovaleric acid), 2,2'-azobis(2-methylpropioneamidine)dicarboxylic acid salt, etc.

The N-oxyl compounds used in the above reaction are not specifically limited, but exemplified are 1-oxyl-2,2,6,6-tetramethyl piperidine, 1-oxyl-2,2,6,6-tetramethyl piperidine, 4-methoxy-2,2,6,6-tetramethylpiperidine-1-oxyl, etc. These oxyl compounds are used singly in combinations.

The ethylenic unsaturated monomers are not specifically limited, but exemplified are styrene, vinyl toluene, divinylbenzene, (meth)acrylate esters, diarlylphthalate, vinyl acetate, etc. These compounds are used singly or in combinations.

As atom transfer radical polymerization reagents exemplified are compounds of organic halogenides having carbon-halogen bond with high reactivity (e.g. carbonyl compounds having halogen atoms at α position or compounds having halogen atom at benzyl position) and transition metals (e.g. cupper with mono-valence, ruthenium with di-valence, iron with di-valence, or nickel with di-valence, etc), or complexes of transition metals (e.g. complexes of copper with mono-valence, ruthenium with di-valence, iron with polyamine ligands such as di-valence or nickel with di-valence with 2,2'-bipyridyl or its derivatives, 1,10-phenanthrorine or its derivatives, tetramethylethylene diamine, pentametyldiethylene triamine, etc, phosphine ligands such as triphenylene diamine, tributyl phosphine, etc, or carbon monoxide). Examples are methyl 2-bromoprpionate/nickel (II) bromide -triphenyl phosphine complexes, (1-bromoethyl) benzene/copper (I) bromide -2,2'-bipiridyl complexes, (1-bromoethyl) benzene/iron (II) cyclopentadienyl bromide, etc.

A mixing rate of the (c) living polymerization reagent is 0.001 to 10 parts by weight per a total amount 100 parts by weight of (A) and (B), and more preferably 0.01 to 1 part by weight.

The living polymerization reagent may be used in a well-known capsuled form prepared by a phase separation method or interface polymerization method, if desired.

### [(D) Component]

In addition to the components (A) to (C), heat resistance of the cured products produced from the resin composition may be further improved by adding (D) component to the resin composition.

As (D) component, organic peroxides and/or organic azo compounds are used.

As the organic peroxides exemplified are benzoyl peroxide, lauroyl peroxide, tertiary butyl perbenzoate, tertiaryamyl perbenzoate, tertiaryamyl peroxyneodecanoate, tetiarybutyl peroxyneodecanoate, tertiary amyl peroxyisobutylate, ditertiarybutyl peroxide, dicumil peroxide, cumenehydro peroxide, 1,1-di(tertiarybutyl peroxy)cyclohexane, 2,2-di(tertiarybutylparoxy)butane, tertiarybutyl hydroperoxide, etc. These peroxides are used singly or in combinations.

As the organic azo compounds, exemplified are 2,2'-azobis(2,4-dimethylvaleronitrile), 2,2'-azobis(2-methylpropionitril), 1,1'-azobis(cyclohexane-1-carbonitrile), 2,2'-azobis[N-(2-propenyl)-2-methylpropionamide], dimethyl-2,2'-azobis(2-methylpropionate), etc. These compounds are used singly or in combinations.

As the (D) component, the organic peroxides or organic azo compounds can be used singly, but both of them can be used in combinations. However, from the view point of heat resistance of the cured products, the organic peroxides are referable.

It is possible to further improve heat resistance of the cured products by low-temperature and short time curing when the (D) organic peroxides and/or organic azo compounds and (C) living polymerization regents are combined. It is thought that the heat resistance by low-temperature and short time curing may be improved by gelling caused by the (C) living polymerization agents and secondary curing caused by the (D) organic peroxides and/or organic azo compounds. Accordingly, the organic peroxides or organic azo compounds having a half-decay time of 10 hours is within a range of -30°C to + 50°C with respect to a curing temperature are preferable, and more preferably the compounds having the half-decay time of 10 hours is within a range of -30°C to +20°C. If the 10 hours decay time is lower by 30°C or further lower than the curing temperature, the heat resistance will be hindered. If the 10 hours decay time is higher by 50°C or more than the curing temperature, the function of the secondary curing by the compounds is insufficient.

A mixing rate of the (D) organic peroxides and/or organic azo compounds used together with the (C) living polymerization reagents to the total amount of 100 parts by weight of (A) plus (B) is preferably 0.0002 to 20 parts by weight, and more preferably 0.002 to 1.5 parts by weight. If the mixing rate is less than 0.0002 part by weight, the function of secondary curing is insufficient, and if the mixing rate is more than 20 parts by weight, the heat resistance may be lowered.

### [Other optional components]

The thermosetting resin composition according to the present invention may contain, if desired, other optional components such as curing accelerators for accelerating curing. As the curing accelerators there are metal salts of naphthenic acid or octylic acid (salts of cobalt, zinc, zirconium, manganese, calcium, etc). These additives are used singly or in combinations.

### [Methods of preparing the resin composition of the present invention]

The thermosetting resin composition of the present invention is prepared by mixing the components (A), (B) and one or more optional components at room temperature (25°C) or under heating to stir the composition to thereby mix it homogeneously. When the composition is heated, a temperature range of 40 to 80°C is preferable, depending on the viscosity and melting point of (A) and (B) . When the composition is stirred, a suitable mixer may be used.

After the resin composition comprising (A) and (B) is prepared, (C) or (C) plus (D) are added and the composition is mixed at room temperature (25°C) homogeneously.

The resin composition is cured by heating at 110 to 140°C for one to three hours. The curing temperature is adjusted in accordance with applications of the resin composition.

When the resin composition of the present invention is applied to motor coils, for example, the resin composition is impregnated into the coils by impregnation method, dripping impregnation method, etc. The methods of the impregnation are well known techniques in the field of the present invention. The resin composition of the present invention may be applied to casting or molding of glass fiber reinforced materials.

The thermosetting resin composition of the present invention can be applied to electric insulation and bonding of electric machine coils of motors, transformers, etc.

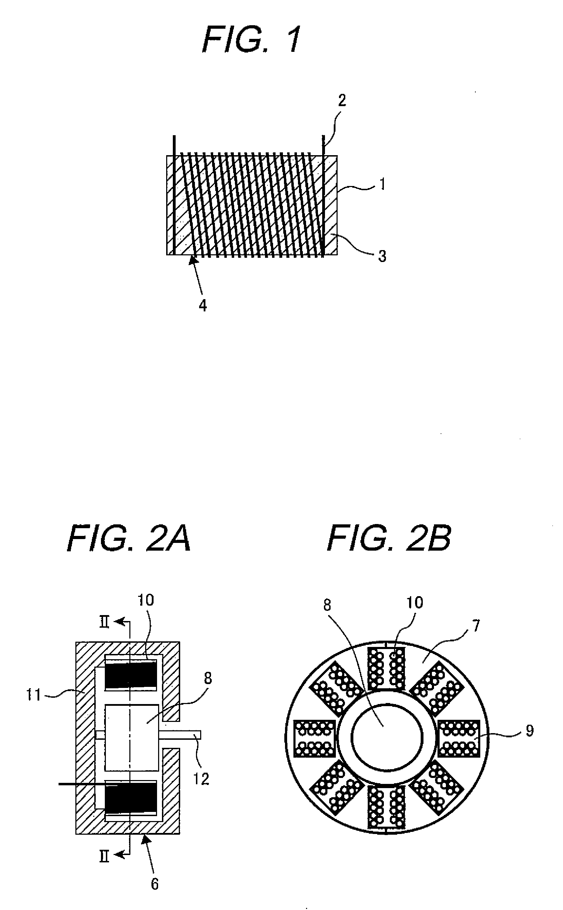

In the following electric machine coils insulation-treated with the thermosetting resin composition of the present invention will be explained by reference to drawings. Fig. 1 diagramatically shows the electric machine coils insulation-treated with the thermosetting resin composition of the present invention. Fig. 2 diagramatically shows an electric rotating machine as an example of electric machines.

As shown in Fig. 1, a winding coil is prepared by winding film-coated conductor wire 2 around a magnetic core 1 made of metal such as iron. The winding coil is coated with the resin composition by a dipping method or dripping-impregnation method. After that, the resin composition is subjected to heating at a predetermined temperature for a predetermined time to obtain a cured product 3 thereby to produce the insulation-treated electric machine coil 4.

As shown in Figs. 2(a), (b), the electric rotating machine 6 comprises a cylindrical stator magnet core 7, a rotating magnet rotor 8, which is fixed to a rotor shaft 12 and rotates in the stator magnet core 7 in coaxial relation therewith, a plurality of stator coils 10 disposed in a casing 11, and a plurality of slots 9 in which stator coils 10 are formed by winding the film-coated conductor winding in an axial direction of one or both of the stator magnet core 7 and the rotor magnet core 8.

The resulting stator core 10 was subjected to an impregnation method or an dripping impregnation method to coat the resin composition thereon. After that, the resin composition was heated at a predetermined temperature for a predetermined time to obtain a stator insulated-treated with the resin composition of the present invention. The stator and the rotor are assembled in accordance with a conventional method to produce an electric rotating machine 6 with the rotor 10 insulation-treated with the resin composition of the present invention.

### Preferred embodiments of the present invention:

Next, the present invention will be explained by reference to embodiments.

### (Embodiment 1)

A thermosetting resin composition comprising 100 parts by weight of unsaturated polyester varnish (a), which is composed of 50 parts by weight of unsaturated polyester resin having a number average molecular weight of 3000 and bisphenol A chain in the molecule thereof and 50 parts by weight of styrene, and 0.2 part by weight of triethyl borane as a living polymerization reagent was prepared. The thermosetting resin composition was mixed in air in a beaker, and then, was cured at 120°C for two hours in a constant temperature bath.

### (Embodiment 2)

The composition prepared in embodiment 1 was cured in air at 120°C for one hour in the constant temperature bath.

### (Embodiment 3)

A thermosetting resin composition comprising 100 parts by weight of unsaturated polyester varnish (b), which is composed of 40 parts by weight of unsaturated polyester resin having a number average molecular weight of 3000 and bisphenol A chain in the molecule thereof and 60 parts by weight of methacrylate, and 0.35 part by weight of isopinocamphenyl borane as a living polymerization reagent was prepared. The thermosetting resin composition was mixed in air in a beaker, and then, was cured at 130°C for one hour in the constant temperature bath.

### (Embodiment 4)

A thermosetting resin composition comprising 100 parts by weight of the unsaturated polyester resin vanish (b) and 0.5 part by weight of 2-bromo methyl propionate/nickel (II) bromide -triphenyl phosphine complex was prepared. The thermosetting resin composition was mixed in air in a beaker, and then, was cured at 120°C for one hour in the constant temperature bath.

### (Embodiment 5)

A thermosetting resin composition comprising 100 parts by weight of the unsaturated polyester resin varnish (b) and 0.35 part by weight of diethylmethoxy borane was prepared. The resulting composition was mixed in air in a beaker and, then, cured at 120°C for 0.5 hour in the constant temperature bath.

### (Embodiment 6)

A thermosetting resin composition comprising 100 parts by weight of the unsaturated polyester resin vanish (b) and 0.35 part by weight of diethylmethoxy borane and 0.5 part by weight of a 50% solution of 1,1-(ditertiarybutyl peroxy)cyclohexane (0.25 part by weight as 1,1-(ditertiarybutyl peroxy) was prepared. The resulting composition was mixed in air in a beaker and, the, cured at 120°C for 0.5 hour in the constant temperature bath.

### (Embodiment 7)

A thermosetting resin composition comprising 100 parts by weight of the unsaturated polyester resin vanish (b), 0.5 part by weight of 2-bromo methyl propionate/nickel (II) bromide -triphenyl phosphine complex and 0.5 part by weight of 2,2'-azobis(N-butyl-2-methylpropione amide) was prepared. The resulting composition was mixed in a beaker in air and cured at 130°C for one hour in the constant temperature bath.

### (Embodiment 8)

100 parts by weight of unsaturated polyester varnish C), which is composed of 60 parts by weight of unsaturated polyester having a number average molecular weight of 3000 and isophthalic chain in the molecule thereof and 40 parts by weight of styrene and 0.35 part by weight of (1-bromoethyl)benzene/copper (I) bromide-2,2'-bipiridyl complex was mixed in air in a beaker, and the varnish was cured at 120°C for two hours in the constant temperature bath.

### (Embodiment 9)

A thermosetting resin composition comprising 100 parts by weight of unsaturated polyester varnish (d), which is composed of 50 parts by weight of unsaturated polyester resin having a number average molecular weight of 1500 and a bisphenol A chain in the molecule thereof and 50 parts by weight of triethylene glycol dimethacrylate, 0.35 part by weight of isopinocamphenyl boron and 0.20 part by weight of tertiarybutyl perbenzoate was prepared. The resulting composition was mixed in air in a beaker, and then, was cured at 120°C for one hour in the constant temperature bath.

### (Embodiment 10)

A thermosetting resin composition comprising 100 parts by weight of unsaturated polyester varnish (d), which is composed of 50 parts by weight of unsaturated polyester resin having a number average molecular weight of 1500 and a bisphenol A chain in the molecule thereof, 50 parts by weight of triethylene glycol dimethacrylate, and 0.35 part by weight of isopinocamphenyl boron, 0.20 part by weight of tertiarybutyl perbenzoate and 0.20 part by weight of 2,2'-azobis(isobutylonitril) was prepared. The resulting composition was mixed in air in a beaker, and then, was cured at 120°C for one hour in the constant temperature bath.

### (Embodiment 11)

A thermosetting resin composition comprising 100 parts by weight of unsaturated polyester varnish (b), which is composed of 40 parts by weight of unsaturated polyester resin having a number average molecular weight of 3000 and a bisphenol A chain in the molecule thereof and 60 parts by weight of methacrylate, 1.6 parts by weight of alkoxysilane represented by the formula (3) was prepared. The resulting composition was mixed in air in a beaker, and then, was cured at 180°C for 16 hours in a constant temperature bath. The above alkoxysilane was prepared in accordance with the technology disclosed in "Macromolecules", 1996, vol. 29, pp. 5245-5254. The 5% weight loss temperature of the resulting cured product was 307°C, which is higher than that of a comparative embodiment 3. This means the cured product exhibits improved heat resistance.

### (Embodiment 12)

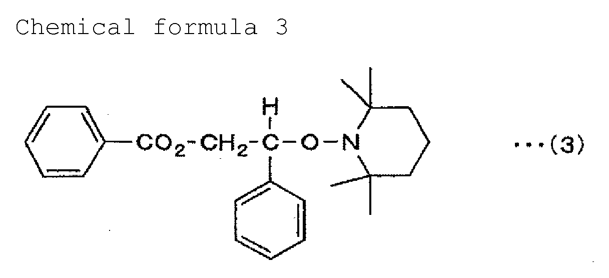

### (Comparative Embodiment 1)

The resin composition of Embodiment 1 was prepared, except that triethyl borane used in embodiment 1 was substituted with 1.6 parts by weight of a 50% solution of 1,1-(ditertiarybutylperoxy)cyclohexane.

### (Comparative embodiment 2)

The resin composition of Embodiment 2 was prepared, except that triethyl borane used in embodiment 2 was substituted with 1.6 parts by weight of a 50% solution of 1,1-(ditertiarybutylperoxy)cyclohexane.

### (Comparative embodiment 3)

The resin composition of Embodiment 3 was prepared, except that tri-isopinocamphenyl borane used in embodiment 3 was substituted with 1.6 parts by weight of a 50% solution of 1,1-(ditertiarybutylperoxy)cyclohexane.

### (Comparative embodiment 4)

The resin composition of Embodiment 6 was prepared, except that (1-bromoethyl)benzene/copper (I) bromide -2,2'-bipiridyl complex used in embodiment 6 was substituted with 1.6 parts by weight of a 50% solution of 1,1-(ditertiarybutylperoxy)cyclohexane.

Cured products obtained from the thermosetting resin compositions of embodiments and comparative embodiments were evaluated in the following manner and results are shown in Tables 1-5. The data shown in Tables 1-5 are measured at 25°C.

Viscosity of the resin compositions of embodiments 1 to 6 was measured with a B-type rotation viscometer B8L, manufactured by Tokyo-Keiki Inc. The viscosity at 25°C was 0.2 to 2 Pa·s.

Dynamic mechanical analysis (DMA) and thermogravimetry analysis (TGA) of the resulting cured products were conducted. The dynamic mechanical analysis was measured with Tritec 2000 manufactured by Shimadzu Corporation, which is a dynamic mechanical analyzer. The analysis was conducted under air flow at 30°C to 250°C at a temperature rise rate of 2°C/min. Tan δ was calculated from the resulted storage elastic modulus and loss elastic modulus, thermal and mechanical properties of the cured products were evaluated from peak temperatures of the cured products. Thermogravimetry was measured with TG/DTA 6200 manufactured by SII Nanotechnologies, Inc., which is a differential scanning calorimetry apparatus (DSC). The analysis was conducted under air stream over 20°C to 600°C at a temperature rise rate of 10°C/min. Heat resistance was evaluated from the 5% weight loss temperature.

Peak temperatures (glass transition temperature) in tan δ and 5% weight loss temperature of DMA were compared between embodiment 1 and comparative embodiment, embodiment 3 and comparative embodiment 3 and embodiment 6 and comparative embodiment 4. Since the values of peak temperatures in tan δ (glass transition temperature) and the 5% weight loss temperature of the embodiments are higher than those of comparative embodiments, heat resistance of the cured products could be improved by employing the living polymerization reagent in place of conventional polymerization initiators.

From the comparison of the peak temperature (glass transition temperature) in tan δ of DMA and the 5% weight loss temperature between embodiment 2 and comparative embodiment 1 it was revealed that even if the curing time is made half of embodiment 1, the heat resistance was not lowered when triethyl borane is used.

From the comparison of the peak temperature (glass transition temperature) in tan δ of DMA and the 5% weight loss temperature between embodiment 4 and comparative embodiment 3 it was revealed that even if the curing temperature is lowered by 10°C than that of embodiment 4, the heat resistance was not lowered when 2-propionic methyl bromide/nickel (II) bromide-triphenyl phosphine is used.

From the comparison of the peak temperature (glass transition temperature) in tan δ of DMA and the 5% weight loss temperature between embodiment 6 and comparative embodiment 3 it was revealed that even if the curing is carried out at lower temperature for shorter time than those of comparative embodiment 3, the heat resistance was not lowered when diethylmethoxy borane is used.

From the comparison of the peak temperature (glass transition temperature) in tan δ of DMA and the 5% weight loss temperature between embodiment 4 and embodiment 5 it was revealed that even if the curing time of embodiment 4 is shorter than that of embodiment 5, the heat resistance was not lowered when 2-propionic acid methyl bromide/nickel(II)-triphenylphosphine bromide complex and 2,2'azobis(N-butyl-2-methylpropione amide) are used.

From the comparison of the peak temperature (glass transition temperature) in tan δ of DMA and the 5% weight loss temperature between embodiment 6 and embodiment 7 it was revealed that the heat resistance was further improved when diethylmethoxy borane and 1,1-(di-tertiary-butylperoxy)cyclohexane are used.

From the comparison of the peak temperature (glass transition temperature) in tan δ of DMA and the 5% weight loss temperature between embodiment 9 and embodiment 10 it was revealed that the heat resistance was further improved when isopinocamphenyl borate and tertiary butyl perbenzoate, and 2,2'-azobis(isobutylonitrile) are used.

**Table 1**

| | Embodiment 1 | Embodiment 2 | Embodiment 3 | Embodiment 4 |
|---|---|---|---|---|
| Varnish (A)+(B) | Unsaturated polyester varnish a | Unsaturated polyester varnish a | Unsaturated polyester varnish b | Unsaturated polyester varnish b |
| (A)/(B) parts by weight | 50/50 | 50/50 | 40/60 | 40/60 |
| Polymerization initiator | Triethyl borane | Triethyl borane | Isopinocamphenyl borane | 2-propionoc acid methyl boride/nickel(II) |
| Viscosity (Pa·s) at 25°C | 0.18 | 0.18 | 2.0 | 2.0 |
| Curing temperature (°C) | 120 | 120 | 130 | 120 |
| Curing time (Hr) | 2 | 1 | 1 | 1 |
| Peak temperature in tan δ in DMA (°C) | 133 | 136 | 95 | 99 |
| 5% weight loss temperature (°C) | 320 | 304 | 312 | 306 |

**Table 2**

| | Embodiment 5 | Embodiment 6 | Embodiment 7 |
|---|---|---|---|
| Varnish (A) + (B) | Unsaturated polyester varnish b | Unsaturated polyester varnish b | Unsaturated polyester varnish b |
| (A) / (B) | 40/60 | 40/60 | 40/60 |
| Polymerization initiator | 2-propionic acid methyl bromide/nickel(II)bromide-triphenylphosph ine +2,2'-azobis(N-butyl-2-methylpropionate amide) | Diethylmethoxy borane | Diethylmethoxy borane + 1,1-ditertiary-butylp eroxy) cyclohexane |
| Viscosity (Pa· s) at 25°C | 2.0 | 2.0 | 2.0 |
| Curing temperature (°C) | 120 | 120 | 120 |
| Curing time (Hr) | 0.5 | 0.5 | 0.5 |
| Peak temperature in tan δ in DMA (°C) | 103 | 95 | 116 |
| 5% weight loss temperature (°C) | 305 | 300 | 304 |

**Table 3**

| | Embodiment 8 | Embodiment 9 | Embodiment 10 | Embodiment 11 |
|---|---|---|---|---|
| Varnish (A)+(B) | Unsaturated polyester varnish c | Unsaturated polyester varnish d | Unsaturated polyester varnish d | Unsaturated polyester varnish b |
| (A)/(B) | 60/40 | 50/50 | 50/50 | 40/60 |
| Polymerization initiator | (1-bromoethyl)benzene/cop per (I)bromide-2,2'-pipyridyl complex | Isopinocamphenyl borane + tertiarybutyl perbenzoate | Isopinocamphenyl borate+ tertiarybutyl+2,2'-azobis( isobutylonitrile) | Compound of formula 3 |
| Viscosity (Pa· s) | 0.15 | 1.5 | 1.5 | 2.0 |
| Curing temperature (°C) | 120 | 120 | 120 | 180 |
| Curing time (Hr) | 2 | 1 | 1 | 16 |
| Peak temperature in tan δ in DMA (°C) | 118 | 133 | 132 | (*) Not measured because of unsuitable sample form |
| 5% weight loss temperature (°C) | 304 | 268 | 266 | 307 |

**Table 4**

| | Comparative Embodiment 1 | Comparative Embodiment 2 | Comparative Embodiment 3 |
|---|---|---|---|
| Varnish (A)+(B) | Unsaturated polyester varnish a | Unsaturated polyester varnish a | Unsaturated polyester varnish b |
| (A)/(B) | 50/50 | 50/50 | 40/60 |
| Polymerization initiator | 1,1-ditertiarybutylperoxy )cyclohexane | 1,1-(ditertiarybutylperoxy ) cyclohexane | 1,1-(ditertiarybutylperoxy) cyclohexane |
| Viscosity (Pa· s) | 0.18 | 0.18 | 2.0 |
| Curing temperature (°C) | 120 | 120 | 130 |
| Curing time (Hr) | 2 | 1 | 1 |
| Peak temperature in tan δ in DMA (°C) | 118 | 120 | 84 |
| 5% weight loss temperature (°C) | 308 | 288 | 297 |

**Table 5**

| | Comparative Embodiment 4 | Comparative Embodiment 5 |
|---|---|---|
| Varnish (A)+(B) | Unsaturated polyester varnish c | Unsaturated polyester varnish d |
| (A)/(B) | 60/40 | 50/50 |
| Polymerization initiator | 1,1-(ditertiarybutylperoxy)cyclohexane | Tertiary butyl perbenzoate |
| Viscosity (Pa· s) | 0.18 | 1.5 |
| Curing temperature (°C) | 120 | 120 |
| Curing time (Hr) | 2 | 1 |
| Peak temperature in tan δ in DMA (°C) | 104 | 128 |
| 5% weight loss temperature (°C) | 277 | 263 |

### (Embodiment 12)

A coli was prepared by winding enameled wire having a diameter of 1 mm on a winding spool. This coil was dipped in the thermosetting resin composition of embodiment 6, and then, was subjected to curing at 120°C for 0.5 hour to obtain insulation-treated coil. The coil showed the same adhesion strength as the coil treated with the thermosetting resin composition of comparative embodiment 3, cured at 130°C for 3 hours.

### (Embodiment 13)

A stator prepared by winding enameled wire having a diameter of 1mm on a spool was dipped in the thermosetting resin composition of embodiment 6, and then, cured at 120°C for 0.5 hour to obtain an insulation-bonding treated coil. Using this stator coil, a motor prepared by a conventional method showed the same insulation properties as those of a motor prepared by dipping a stator in the thermosetting resin composition of comparative embodiment 3.

## Claims

1. A thermosetting resin composition comprising (A) a polymeric component having at least two polymerizable substituents in the molecule, (B) a compound having at least one polymerizable substituent in the molecule and (C) a living polymerization agent for curing the resin composition.

2. The thermosetting resin composition according to claim 1, wherein the polymerizable substituent of the (A) and (B) is an ethylenic unsaturated bond.

3. The thermosetting resin composition according to claim 1 or 2, wherein (A) is an unsaturated polyester.

4. The thermosetting resin composition according to any one of claims 1 to 3, wherein a weight ratio of (A)/(B) is 80/20 to 1/99,

5. The thermosetting resin composition according to any one of claims 1 to 4, wherein the (C) component has a radical polymerization ability.

6. The thermosetting resin composition according to anyone of claims 1 to 5, wherein the (C) component is a boric compound represented by the following general formula. 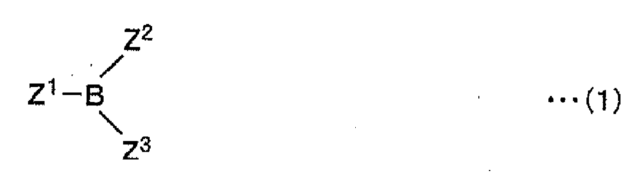 (In the formula at least one of Z¹, Z² and Z³ is R¹, and Z¹, Z² and Z³ are independently R¹ or OR¹, wherein R¹ is one of hydrogen, an alkyl group, a cyclo-alkyl group, an alalkyl group and an aryl group.

7. The thermosetting resin composition according to any one of claims 1 to 6, wherein an amount of (C) is 0.001 to 10 parts by weight per 100 parts by weight of a total amount of (A) and (B).

8. The thermosetting resin composition according to any one of claims 1 to 7, which further comprises (D) component selected from the group consisting of organic azo compounds and organic peroxides.

9. The thermosetting resin composition according to claim 8, wherein the (D) component is an organic peroxide.

10. The thermosetting resin composition according to any one of claims 1 to 9, wherein the resin composition has a viscosity of 0.001 to 100Pa • s at 25°C.

11. A coil for an electric machine comprising a magnetic core and a winding wound around the magnetic core, which is insulating treated with a cured composition of the thermosetting resin composition of any one of claims 1 to 10.

12. An electric machine that uses the coil defined in claim 11.

13. A coil for an electric machine comprising a magnetic core and a winding wound around the magnetic core, which is insulating treated with a cured composition of the thermosetting resin composition of claim 8.

14. A coil for an electric machine comprising a magnetic core and a winding wound around the magnetic core, which is insulating treated with a cured composition of the thermosetting resin composition of claim 9.

15. A coil for an electric machine comprising a magnetic core and a winding wound around the magnetic core, which is insulating treated with a cured composition of the thermosetting resin composition of claim 10.
